# EUROPÄISCHE PATENTANMELDUNG

(11) **EP 1 588 654 A2**
(43) Veröffentlichungstag der Anmeldung: **26.10.2005**
(21) Anmeldenummer: 05101975.0
(22) Anmeldetag: 14.03.2005
(51) Int. Cl.: A47J 37/07

(54) **Grillzusatzgerät**

(30) Priorität: 23.04.2004 DE 102004020390
(71) Anmelder: Firepoint GmbH & Co. KG, 32289 Rödinghausen (DE)
(72) Erfinder: Ritzmann, Lutz H., 32257 Bünde (DE)
(74) Vertreter: Dantz, Jan Henning

(57) **Zusammenfassung**

Es soll ein Grillzusatzgerät (10) geschaffen werden, welches so ausgelegt ist, dass es mit jedem Grill kombiniert werden kann. Dazu ist das Grillzusatzgerät (10) mit einer Grillschale (14) oder Grillplatte ausgerüstet, die vorzugsweise um die Längsachse einer Tragsäule (12) schwenkbar sind. Die Tragsäule (12) besteht aus mehreren Rohrabschnitten (16), so dass der Abstand zwischen der jeweiligen Grillschale (14) und der Glut geändert werden kann. Die Tragsäule (12) ist an den Randbereich eines Fußteils (11) festgesetzt.

## Beschreibung

Es ist allgemein bekannt, dass während der sommerlichen Jahreszeit im Freien gegrillt wird. Dazu wird in der Grillschale des Grillgerätes Holzkohle entzündet. Da das Grillgut fetthaltig ist, ist es unvermeidbar, dass Fett in die Glut tropft und entflammt wird, wodurch nachweislich krebserregende Stoffe entstehen.

Um das Tropfen von Fett in die Glut zu verhindern, sind aus Aluminiumfolie gefertigte Grillschalen bekannt, deren Boden Rillen aufweisen, in denen sich das Fett sammeln kann. Damit die Hitze jedoch zum Grillgut gelangt, sind die die Rillen bildenden Stege geschlitzt. Es ist auch schon bekannt, über den Rost eine Folie zu legen oder auf den Rost eine sogenannte Steakplatte zu legen. Sofern eine Platte verwendet wird, sind die sogenannten Specksteinplatten vorteilhaft, da derartige Platten sehr viel Wärme abgeben. Durch die zuvor beschriebenen Mittel wird zwar zumindest weitgehend das Tropfen von Fett in die Glut verhindert, nachteilig ist jedoch, dass man diese Mittel nicht von dem Rost nehmen und auf den Tisch setzen kann, da sie sehr heiß sind und der Boden verrußt ist. Außerdem sind diese Mittel von der Bauart des Grillgerätes abhängig, so dass der Einsatz beschränkt ist.

Der Erfindung liegt die Aufgabe zugrunde, ein von der Bauart des Grillgerätes unabhängiges Grillzusatzgerät zu schaffen, mit dem durch den Einsatz der vorerwähnten Mittel verhindert werden kann, dass Fett in die Glut tropft, und dass darüber hinaus das Grillgut in einfachster Weise aus dem Bereich des Grillgerätes entfernt werden kann.

Die gestellte Aufgabe wird durch ein mit Laufrollen versehenes Fußteil und einer daran festgelegten Tragsäule gelöst, an der mindestens eine Grillschale oder Grillplatte angeordnet ist, die vorzugsweise gegenüber der Tragsäule verschwenkbar ist.

Das Grillgut wird nunmehr nicht auf dem Rost eines Grillgerätes gegart, sondern in der an der Tragsäule angeordneten Grillschale. Da das Fußteil als tragendes Bauteil mit Laufrollen versehen ist, kann ohne besondere Umstände das komplette Gerät mit dem noch aufliegenden Grillgut verfahren werden, beispielsweise in die Nähe eines Tisches, so dass das Grillgut direkt entnommen werden kann. Dabei ist die Schwenkbarkeit von Vorteil, da das Grillzusatzgerät bis dicht an die Tischplatte herangefahren werden kann, und dann die Grillschale beispielsweise in den Bereich der Mitte und oberhalb der Tischplatte geschwenkt werden kann.

Damit das Grillzusatzgerät nicht selbsttätig oder versehentlich verfahren wird, ist vorgesehen, dass zumindest ein Teil der Laufrollen als Feststellrollen bzw. als Bremsrollen ausgebildet sind. Damit eine ausreichende Standsicherheit des Grillzusatzgerätes gegeben ist, ist vorgesehen, dass das Fußteil schalenförmig ausgebildet ist. In das Fußteil kann dann beispielsweise Wasser, Sand oder ein ähnlicher Stoff zur Beschwerung und zur Verlagerung des Schwerpunktes des Grillzusatzgerätes nach unten eingefüllt werden.

Damit der Abstand zwischen dem Grillgerät und der Grillschale des Grillzusatzgerätes an die Höhe des Grillgerätes angepasst werden kann, ist vorgesehen, dass die Tragsäule aus mehreren, teilweise ineinandergesteckten sowie gegeneinander verdrehbaren Rohrabschnitten gebildet ist, und dass jede Grillschale am freien Ende eines Auslegers gehalten und jeder Ausleger mit dem gegenüberliegenden Ende an einem Rohrabschnitt festgelegt ist. Da die einzelnen Rohrabschnitte gegenüber der gesamten Höhe der Tragsäule relativ kurz sind, lässt sich jeweils ein optimaler Abstand zwischen dem Grillgerät und der Grillschale einstellen. Außerdem kann dieser Abstand im Bedarfsfall auch geändert werden. Da der die Grillschale aufnehmende Ausleger voll drehbar ist, kann die Grillschale in jede beliebige Position geschwenkt werden.

In weiterer Ausgestaltung ist noch vorgesehen, dass mehrere Grillschalen an der Tragsäule angeordnet sind, die im Abstand zueinander stehen. Insbesondere wenn der Bedarf an Grillgut größer ist als eine Grillschale aufnehmen kann, ist es auch möglich, dass eine Grillschale aus dem Bereich des Grillgerätes herausgeschwenkt wird und eine zweite Grillschale oberhalb des Grillgerätes platziert wird. Wenn dann der gleiche Abstand des Grillgutes zur Glut gewünscht wird, kann das Grillzusatzgerät auch so ausgelegt werden, dass ein oder mehrere Ausleger gekröpft sind. Ferner können unterhalb einer Grillschale oder einer Grillplatte auch Aufnahmeelemente, wie Körbe oder Schalen vorgesehen sein, um Nahrungsmittel darin zu lagern.

Zur besseren Reinigung der Grillschalen ist vorgesehen, dass jede Grillschale auswechselbar am freien Ende des sie tragenden Auslegers angeordnet ist.

Ferner ist besonders vorteilhaft, wenn diese Auswechselbarkeit durch einen in eine Hülse eingreifenden Bolzen erfolgt. Der Bolzen kann beispielsweise am Boden der Grillschale festgelegt sein, während die Hülse am freien Ende des jeweiligen Auslegers festgelegt ist. Außerdem besteht dadurch die Möglichkeit, dass auch während des Garens die Grillschale gedreht wird.

Damit die von der Glut abgestrahlte Hitze auch auf das Grillgut trifft, ist vorgesehen, dass jede Grillschale als Gitter ausgebildet ist oder dass im Boden Öffnungen vorgesehen sind. In bevorzugter Ausführung ist jedoch vorgesehen, dass in die Grillschale wiederum eine Specksteinplatte eingelegt ist, damit aus den eingangs dargelegten Gründen kein Fett in die Glut tropft. Ferner hat die Verwendung einer Specksteinplatte noch den Vorteil, dass sie aufgrund der extremen Wärmespeicherfähigkeit sich nur langsam abkühlt, wenn sie aus dem Strahlungsbereich der Glut entfernt wird. Dadurch kann das Grillgut noch über einen relativ langen Zeitraum warmgehalten werden, ohne dass die Gefahr des Verbrennens besteht.

Beim Grillen werden noch zusätzliche Mittel benötigt, die als Grillbestecke bezeichnet werden. Es ist deshalb vorgesehen, dass für derartige Hilfsmittel, wie Grillbestecke, Halterungen an den Rohrabschnitten angeordnet sind. Ferner könnten auch noch Ablagen an den Rohrstücken angesetzt sein, damit beispielsweise Dosen, Gläser und ähnliche Verpackungen darauf abgestellt werden können.

Besonders vorteilhaft ist, wenn das Grillzusatzgerät aus Edelstahl gefertigt ist. Dadurch entfällt ein Korrosionsschutz und es wird ein ansprechendes Äußeres erreicht. Außerdem wäre eine anderweitige Verwendung außerhalb der Grillsaison durchaus möglich, beispielsweise als Universalaufbewahrungsgerät in der Küche oder im Badezimmer eines Haushaltes. Das Grillzusatzgerät könnte demzufolge auch als Multifunctions Butler bezeichnet werden.

Anhand der beiliegenden Zeichnung wird die Erfindung noch näher erläutert. Es zeigt:

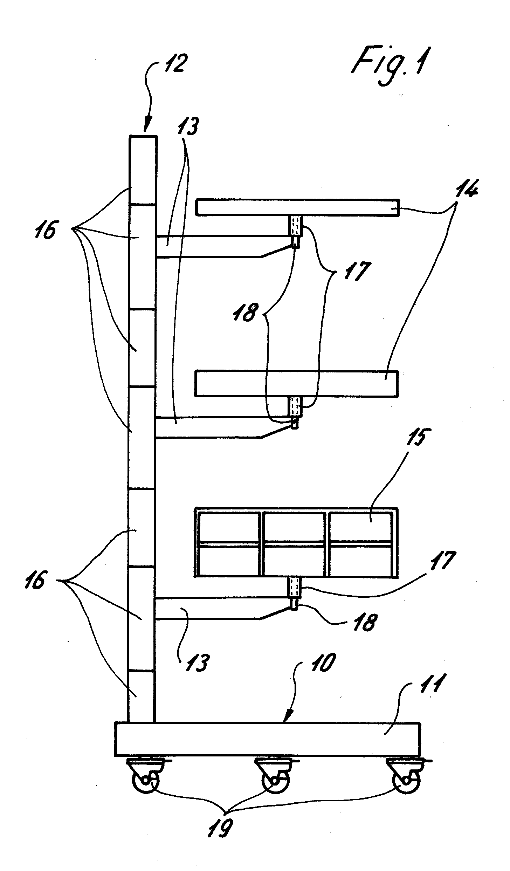

- Figur 1: eine bevorzugte Ausführungsform eines erfindungsgemäßen Grillzusatzgerätes im Aufriss, rein schematisch.

Das in der Figur 1 dargestellte Grillzusatzgerät 10 besteht im wesentlichen aus einem Fußteil 11, einer daran festgelegten Tragsäule 12 und im dargestellten Ausführungsbeispiel drei an der Tragsäule 12 festgelegte Ausleger 13, deren freie Enden Grillschalen 14 tragen. Statt der Grillschale 14 kann auch eine Grillplatte aus Metall oder Stein am Ausleger 13 montiert sein.

Im dargestellten Ausführungsbeispiel ist das Grillzusatzgerät 10 mit drei Grillschalen 14 und demzufolge auch mit drei Auslegern 13 ausgestattet. Die beiden oberen Grillschalen 14 zeigen, dass die Höhen unterschiedliche sein können, während die untere Grillschale 14 mit einem Windschutz 15 ausgestattet ist. Die unteren Grillschalen 14 können auch nur zur Aufbewahrung von Nahrungsmitteln dienen und müssen nicht erhitzt werden. Die Tragsäule 12 ist aus mehreren Rohrabschnitten 16 gebildet, die in nicht näher dargestellter Weise teilweise ineinandergesteckt sind. Die Ausleger 13 sind fest an den einzelnen Rohrabschnitten 16 angeordnet, so dass jeder Ausleger 13 voll drehbar ist. Jede Grillschale 14 kann aus einem Gitter hergestellt sein, es ist jedoch in bevorzugter Ausführung vorgesehen, dass der Boden mit Löchern versehen ist, damit die von der Glut des Grillgerätes abgestrahlte Hitze den Boden durchdringen kann.

In nicht näher dargestellter Weise ist jede Grillschale 14 gegenüber dem Ausleger 13 drehbar, da an der unteren, dem Fußteil 11 zugewandten Seite eine Hülse 17 angesetzt ist, die auf einen am freien Ende des Auslegers 13 festgesetzten Bolzen 18 aufgesteckt ist. Auch die Umkehrung dieser beiden Bauteile ist möglich. Jede Grillschale 14 kann deshalb beispielsweise zwecks Reinigung vom Ausleger 13 abgenommen werden. Jede Grillschale 14 kann um seine eigene Mittellängsachse gedreht werden und um die Mittellängsachse der Tragsäule 12 durch Drehung des Auslegers 13.

Damit das Grillzusatzgerät 10 verfahrbar ist, ist das Fußteil 11 mit mehreren Laufrollen 19 ausgestattet, die Lenkrollen sein können. Ferner ist es möglich, statt der Laufrollen 19 Gleitelemente vorzusehen. Damit das Grillzusatzgerät 10 nicht versehentlich oder ungewollt verfahren werden kann, sind diese Laufrollen 19 als Feststellrollen oder als Bremsrollen ausgebildet.

Die Erfindung ist nicht auf das dargestellte Ausführungsbeispiel beschränkt. Wesentlich ist, dass das Grillzusatzgerät 10 gegenüber einer feststehenden Wärmequelle, wie einem Grill oder einem Kamin bewegbar ist und so flexibel zum Grillen eingesetzt werden kann. Dabei kann die Glut auf das Grillgut einwirken, und nach dem Grillen kann das Zusatzgerät von der Wärmequelle wieder entfernt werden. Durch die Wärmespeicherfähigkeit der Grillplatte oder der Grillschale aus Metall oder Stein, vorzugsweise Speckstein, kann das Grillzusatzgerät nach dem Erhitzen auch beabstandet von einer Wärmequelle verwendet werden. Dabei kann die Grillschale 14 gegenüber der Tragsäule 12 verschwenkt werden, so dass das Grillgut direkt vom Verzehrer aus der Grillschale 14 genommen werden kann. Ferner ist es vorteilhaft, wenn die Tragsäule 12 so ausgelegt ist, dass der Abstand zwischen der Glut und der Grillschale 14 verändert werden kann.

### Bezugszeichenliste

- 10: Grillzusatzgerät
- 11: Fußteil
- 12: Tragsäule
- 13: Ausleger
- 14: Grillschalen
- 15: Windschutz
- 16: Rohrabschnitte
- 17: Hülse
- 18: Bolzen
- 19: Laufrollen

## Patentansprüche

1. Grillzusatzgerät **gekennzeichnet durch** ein mit Laufrollen (19) oder Gleitelementen versehenes Fußteil (11) und einer daran festgelegten Tragsäule (12), an der mindestens eine Grillschale (14) oder eine Grillplatte aus hitzebeständigem Material angeordnet ist.

2. Grillzusatzgerät nach Anspruch 1, **dadurch gekennzeichnet, dass** die Tragsäule (12) außermittig am äußeren Randbereich an dem Fußteil (11) festgelegt ist.

3. Grillzusatzgerät nach Anspruch 1, **dadurch gekennzeichnet, dass** die Laufrollen (19) als Feststellrollen oder als Bremsrollen ausgebildet sind.

4. Grillzusatzgerät nach Anspruch 1, **dadurch gekennzeichnet, dass** das Fußteil (11) schalenförmig ausgebildet ist.

5. Grillzusatzgerät nach einem oder mehreren der vorhergehenden Ansprüche 1 bis 4, **dadurch gekennzeichnet, dass** die Grillschale (14) oder die Grillplatte gegenüber der Tragsäule (12) verschwenkbar ist.

6. Grillzusatzgerät nach einem der Ansprüche 1 bis 5, **dadurch gekennzeichnet, dass** die Tragsäule (12) aus mehreren, teilweise ineinandergesteckten sowie gegeneinander verdrehbaren Rohrabschnitten (16) gebildet ist, und dass jede Grillschale (14) am freien Ende eines Auslegers (13) gehalten und jeder Ausleger (13) mit dem gegenüberliegenden Ende an einem Rohrabschnitt (16) festgelegt ist.

7. Grillzusatzgerät nach einem oder mehreren der vorhergehenden Ansprüche 1 bis 6, **dadurch gekennzeichnet, dass** mehrere Grillschalen (14) oder Grillplatten über die Ausleger (13) im Abstand an der Tragsäule (12) angeordnet sind oder unterhalb einer Grillschale (14) oder eine Grillplatte ein Aufnahme für Nahrungsmittel angeordnet ist.

8. Grillzusatzgerät nach Anspruch 7, **dadurch gekennzeichnet, dass** zur Einhaltung einer gleichbleibenden Höhe der Grillschalen (14) die Ausleger (13) teilweise gekröpft sind.

9. Grillzusatzgerät nach einem oder mehreren der vorhergehenden Ansprüche 1 bis 8, **dadurch gekennzeichnet, dass** jede Grillschale (14) auswechselbar am freien Ende des sie tragenden Auslegers (13) angeordnet ist.

10. Grillzusatzgerät nach einem oder mehreren der vorhergehenden Ansprüche 1 bis 9, **dadurch gekennzeichnet, dass** jede Grillschale (14) als Gitter ausgebildet ist, oder dass im Boden jeder Grillschale (14) Öffnungen vorgesehen sind.

11. Grillzusatzgerät nach einem oder mehreren der vorhergehenden Ansprüche 1 bis 9, **dadurch gekennzeichnet, dass** in die Grillschalen (14) Grillplatten eingelegt sind, die vorzugsweise als Specksteinplatten ausgebildet sind.

12. Grillzusatzgerät nach einem oder mehreren der vorhergehenden Ansprüche 1 bis 10, **dadurch gekennzeichnet, dass** jede Grillschale (14) gegenüber dem Ausleger (13) drehbar ist, und dass diese Drehfähigkeit aus einer Hülse (17) und einem eingreifenden Bolzen (18) gebildet ist, wobei vorzugsweise der Bolzen (18) am Ausleger (13) befestigt und die Hülse (17) am Boden der Grillschale (14) angeordnet ist.

13. Grillzusatzgerät nach einem oder mehreren der vorhergehenden Ansprüche 1 bis 11, **dadurch gekennzeichnet, dass** an den Rohrabschnitten (16) Halterungen und Ablagen für Grillhilfsmittel und für Verpackungen angeordnet sind.

14. Grillzusatzgerät nach einem oder mehreren der vorhergehenden Ansprüche 1 bis 12, **dadurch gekennzeichnet, dass** das Grillzusatzgerät (10) aus einem korrosionsbeständigem Edelstahl gefertigt ist.
